# EUROPÄISCHE PATENTSCHRIFT

(11) **EP 0 587 653 B1**
(45) Veröffentlichungstag und Bekanntmachung des Hinweises auf die Patenterteilung: **08.01.1997**
(21) Anmeldenummer: 92911312.4
(22) Anmeldetag: 02.06.1992
(51) Int. Cl.: B25B 23/14, B23P 19/06, G01D 1/00

(54) **PRÜFGERÄT ZUM ÜBERPRÜFEN DER QUALITÄT VON SCHRAUBVERBINDUNGEN**
INSTRUMENT FOR TESTING THE QUALITY OF SCREWED CONNECTIONS
APPAREIL DE CONTROLE DE LA QUALITE D'ASSEMBLAGES VISSES

(30) Priorität: 06.06.1991 DE 4118595
(43) Veröffentlichungstag der Anmeldung: 23.03.1994
(73) Patentinhaber: SCHATZ GMBH, D-42897 Remscheid (DE)
(72) Erfinder: SCHATZ, Volker, D-42853 Remscheid (DE)
(74) Vertreter: Glawe, Delfs, Moll & Partner
(86) Internationale Anmeldenummer: EP9201225
(87) Internationale Veröffentlichungsnummer: WO9221483

(56) Entgegenhaltungen:
- EP-A- 0 425 898
- DE-A- 3 222 156
- DE-A- 3 324 333

## Beschreibung

Die Erfindung betrifft ein Prüfgerät zum Überprüfen der Qualität von Schraubverbindungen, wie im Oberbegriff des Anspruchs 1 angegeben. Ein Prüfgerät dieser Art ist aus der Firmenschrift "Schatzbrief", Januar 1990, bekannt. Bei vielen industriellen Fertigungs- und Montagevorgängen, bei denen Schraubverbindungen verwendet werden, ist es erforderlich, die Qualität der Schraubverbindungen, insbesondere die Einhaltung des vorgeschriebenen Anziehdrehmomentes, laufend zu überwachen. Aufgrund sich verschärfender Anforderungen hinsichtlich Produkthaftung und der damit verbundenen Dokumentationspflicht geht der Trend von einer lediglich stichprobenartigen Überwachung zu einer möglichst lükkenlosen Qualitätskontrolle. Mit einem Prüfgerät der angegebenen Art, das als netzunabhängiges, tragbares Koffergerät ausgebildet ist, können an jedem beliebigen Einsatzort, z.B. einer Montagelinie für Serienmontage, die Meßwertverläufe für Drehmoment und Drehwinkel, unter Verwendung eines mit entsprechenden Sensoren ausgerüsteten Kraftschraubers, für eine Vielzahl von Schraubvorgängen meßtechnisch erfaßt und im Gerät abgespeichert werden. Der im Gerät enthaltene Rechner ermöglicht bereits vor Ort eine statistische Auswertung der aufgenommenen Meßdaten, um eine erste Aussage über die Qualität der Schraubverbindungen bzw. etwaiger Toleranzabweichungen treffen zu können. Das bekannte Gerät hat ferner einen Signalausgang für den Anschluß an einen Rechner, Drucker und/oder Plotter, mit dem die Schraubvorgänge weiter ausgewertet, lückenlos dokumentiert und auch im Drehwinkel-Drehmoment-Diagramm graphisch dargestellt werden können.

Mit diesem bekannten Gerät kann nur eine relativ kleine Anzahl von kompletten Meßverläufen gespeichert werden, und erst nach der Speicherung kann durch Meßwertanzeige an dem Gerät oder durch Darstellen der gespeicherten Meßkurve auf einem Plotter oder Rechner festgestellt werden, ob sich unter den gespeicherten Meßverläufen zufällig ein oder mehrere fehlerhafte und deshalb zu analysierende Schraubvorgänge befinden. Mit dem bekannten Gerät ist es deshalb nicht oder nur mit ständiger Bedienung oder Überwachung durch eine geschulte Person möglich, aus einer sehr großen Anzahl von Schraubvorgängen gerade die fehlerhaften Vorgänge herauszugreifen und sie anhand der gespeicherten Meßkurven zu analysieren.

Aus DE-A-32 22 156 ist ein rechnergesteuerter Schrauber bekannt, wobei der mit dem Schrauber permanent verbundene Rechner den Schraubvorgang in Abhängigkeit von einer vorgegebenen Kennlinie steuert. Anhand der ständig überwachten Istwerte kann ein Schraubvorgang auch als fehlerhaft erkannt und abgebrochen werden. Die Istwerte können auf einem Bildschirm als Kennlinie dargestellt werden, werden jedoch nach Beendigung des Schraubvorganges nicht gespeichert. Als Prüfgerät zur Überprüfung einer Vielzahl von Schraubvorgängen, die von einem oder mehreren Schraubern ausgeführt werden, und zur Analyse fehlerhafter Schraubvorgänge anhand der gespeicherten Meßkurven ist dieses bekannte Gerät nicht verwendbar.

Der Erfindung liegt die Aufgabe zugrunde, ein Prüfgerät der genannten Art dahingehend zu verbessern, daß es am Einsatzort ohne Verwendung zusätzlicher Geräte in einfacher Weise eine sofortige und gezielte Analyse solcher Schraubvorgänge ermöglicht, die sich vom normalen bzw. hinsichtlich seiner Toleranzen vorgegebenen Schraubfall in charakteristischer Weise unterscheiden.

Diese Aufgabe wird erfindungsgemäß gelöst mit einem Schraubgerät, das die Merkmale des Anspruchs 1 aufweist. Die Unteransprüche beziehen sich auf weitere vorteilhafte Ausgestaltungen des Prüfgeräts.

Das erfindungsgemäße Meßgerät kann in der Weise verwendet werden, daß es lückenlos die Meßwertverläufe sämtlicher am Einsatzort durchgeführter Schraubverbindungen aufnimmt. Schraubverbindungen, deren charakteristischer Wert im Sollbereich liegt, werden jedoch nicht abgespeichert, da sie für eine Fehlersuche nicht interessieren. Die Speicherkapazität des Datenspeichers wird für die Meßwerte derjenigen Schraubvorgänge reserviert, deren charakteristischer Wert außerhalb des Toleranzbereichs liegt. Der Prüfer kann bereits vor Ort, ohne das Prüfgerät an einen Rechner, Plotter oder dgl. anschließen zu müssen, sich die Meßwertkurve der abgespeicherten "unnormalen" Schraubvorgänge auf dem am Gerät vorhandenen Bildschirm ansehen und aus dieser Kurve wichtige Aufschlüsse über mögliche Fehlerursachen bei der als auffällig erkannten Schraubverbindung gewinnen.

Eine Ausführungsform der Erfindung wird anhand der Zeichnungen erläutert. Es zeigt:
- Fig. 1: eine perspektivische, vereinfachte Darstellung des erfindungsgemäßen Prüfgeräts;
- Fig. 2: ein Beispiel für die graphische Darstellung des Meßwertverlaufes für einen Schraubvorgang;
- Fig. 3: ein Funktionsblockschema des in dem Prüfgerät vorgesehenen Rechners.

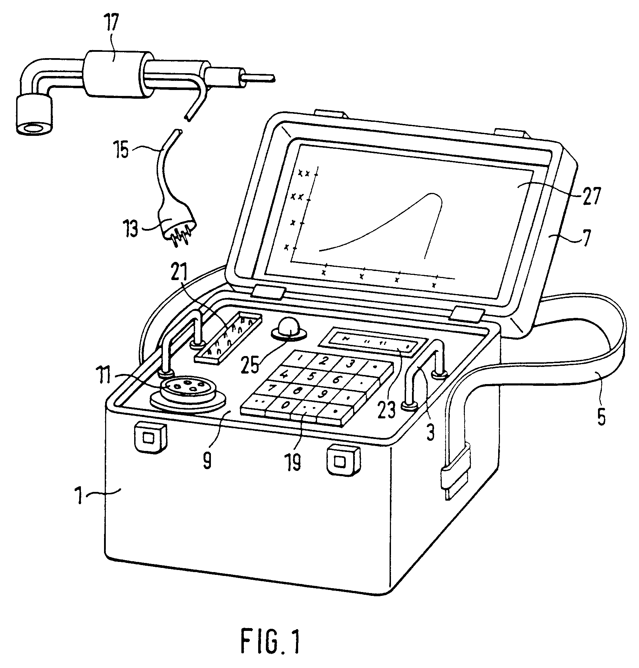

Gemäß Fig. 1 hat das Prüfgerät ein Gehäuse 1 in Form eines tragbaren Koffers, der mit Griffen 3, die z.B. versenkbar an der Frontplatte angeordnet sind, und/oder mittels eines Tragriemens 5 bequem getragen werden kann. Durch Aufklappen eines Deckels 7 wird die Frontplatte mit Bedienfeld 9 an der Oberseite des Gehäuses 1 freigelegt. In diesem befindet sich ein Steckanschluß 11 zur Verbindung mit einem Stecker 13 einer Meßleitung 15, die von einem Kraftschrauber 17 kommt, welcher mit Sensoren (nicht dargestellt) für Drehwinkel und Drehmoment versehen ist. Am Bedienfeld 9 befindet sich ferner eine Tastatur 19 zur Daten- und Befehlseingabe, ein Ausgangseinschluß 21 für den Anschluß einer Datenverbindungsleitung zu einem Rechner, Drucker und/oder Plotter, ein kleines Anzeigefeld 23 für alphanumerische Anzeige eingegebener oder gespeicherter Daten. An der Innenseite des Deckels 7 ist ein Graphikbildschirm 27 angeordnet, der von dem im Gehäuse 1 vorhandenen Rechner angesteuert werden kann.

Das Prüfgerät kann im Prinzip für beliebig viele vom Kraftschrauber 17 durchgeführte Schraubvorgänge die fortlaufend aufgenommenen Wertpaare für Drehwinkel und Drehmoment aufnehmen und, falls ausreichend Speicherkapazität zur Verfügung steht, auch abspeichern. Da aber einerseits die Speicherkapazität aus praktischen Gründen begrenzt ist und da es andererseits einen unnötigen Aufwand bedeuten würde, aus einer Vielzahl von abgespeicherten "normalen" Schraubvorgängen die evtl. fehlerbehafteten Schraubvorgänge zu selektionieren und mit einem angeschlossenen Gerät zu analysieren, werden mit dem erfindungsgemäßen Gerät nur Schraubvorgänge mit Toleranzabweichungen im Datenspeicher abgespeichert.

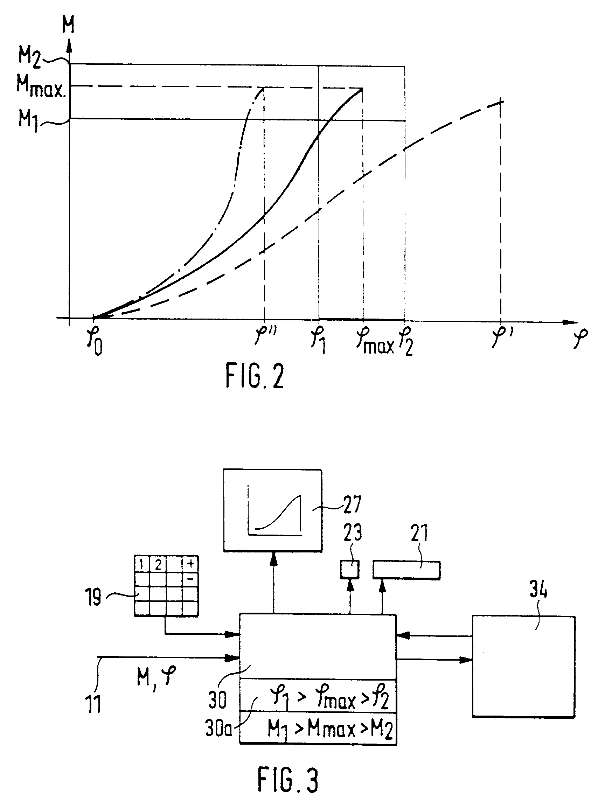

Dies wird anhand von Fig. 2 erläutert, die ein Beispiel für die Darstellung eines Schraubverlaufes zeigt, wobei auf der Abszissenachse der Drehwinkel ϕ und auf der Koordinatenachse das Drehmoment M aufgetragen ist. Bei einem Anfangswinkel ϕₒ, bei dem der Schraubenkopf bzw. die Mutter in Berührung mit der Unterlage kommt, steigt das Drehmoment in der Regel kontinuierlich an, bis es einen maximalen Wert Mₘₐₓ erreicht, welches in der Regel ein Sollwert ist, bis zu dem die Schraube angezogen werden soll und bei dessen Erreichen der Kraftschrauber automatisch abschaltet. Der Wert von Mₘₐₓ hängt selbstverständlich von der Dimensionierung und den sonstigen konstruktiven Gegebenheiten der jeweiligen Schraubverbindung ab. Das maximale Drehmoment Mₘₐₓ wird bei einem Winkel ϕₘₐₓ erreicht, der bei ordnungsgemäßer Schraubverbindung einen definierten Wert haben bzw. in einem vorgegebenen Sollbereich von ϕ₁ bis ϕ₂ liegen muß. Wird dagegen das Enddrehmoment Mₘₐₓ erst bei einem Winkel ϕ' oder ϕ'' erreicht, der außerhalb des Sollbereiches ϕ₁ bis ϕ₂ liegt, so liegt ein nicht ordnungsgemäßer Schraubfall vor (gestrichelte bzw. strichpunktierte Linien in Fig. 2). Solche Schraubfälle werden erfindungsgemäß im Gerät abgespeichert und können am Bildschirm 27 sichtbar gemacht werden.

Das Enddrehmoment Mₘₐₓ kann ein - für die jeweilige Schraubenart und -größe - fest vorgegebener Wert sein, der im Speicher des Rechners abgespeichert ist und abgerufen werden kann. Vorzugsweise wird jedoch vom Rechner als Enddrehmoment Mₘₐₓ der tatsächliche erreichte Maximalwert des gemessenen Drehmoments herangezogen. In diesem Fall kann dann als zusätzliches Bewertungskriterium festgestellt werden, ob das Enddrehmoment Mₘₐₓ selbst in einem vorgegebenen Sollbereich M₁ bis M₂ liegt. Wenn dies nicht der Fall ist, liegt eine fehlerhafte Schraubverbindung und/oder ein Fehlverhalten des Kraftschraubers vor. Der Rechner steuert daher auch für solche Schraubfälle, bei denen Mₘₐₓ außerhalb des Sollbereiches M₁ bis M₂ liegt, das Abspeichern des entsprechenden Meßwerteverlaufs im Speicher.

Fig. 3 zeigt ein Blockschema zur Veranschaulichung der Funktionsweise des Rechners. Die vom Signaleingang 11 laufend aufgenommenen Meßwerte des Drehmoments M und Drehwinkels ϕ werden vom Rechner 30 laufend aufgenommen. Der Rechner stellt fest, bei welchem maximale Drehwinkel ϕₘₐₓ das maximale Drehmoment Mₘₐₓ erreicht wird, vergleicht diese Werte ϕₘₐₓ und Mₘₐₓ in einer durch entsprechende Programmierung realisierten Vergleicherstufe 30a mit den Sollbereichen ϕ₁ bis ϕ₂ und M₁ bis M₂. Nur, wenn ϕₘₐₓ oder M ₘₐₓ außerhalb des jeweiligen Sollbereiches liegt, wird der gesamte Meßwerteverlauf M, ϕ des betreffenden Schraubvorganges im Datenspeicher 34 abgespeichert. Durch entsprechende Befehlseingabe von der Tastatur 19 können die gespeicherten Meßwertverläufe aus dem Datenspeicher 34 abgerufen und auf dem Bildschirm 27 als Kurve dargestellt werden. Alle gespeicherten Meßwerte können auch über die Schnittstelle 21 an ein angeschlossenes Gerät übertragen werden. In der Anzeige 23 kann dem Benutzer angezeigt werden, daß ein vom Normalverlauf abweichender Schraubverlauf festgestellt und abgespeichert wurde.

Das beschriebene Ausführungsbeispiel, bei dem das maximale Drehmoment Mₘₐₓ oder der maximale Drehwinkel ϕₘₐₓ die charakteristischen Werte darstellen, die als Kriterium für das Abspeichern des Meßwerteverlaufes dient, sind nur einige von vielen Realisierungsmöglichkeiten. Es ist selbstverständlich möglich, andere oder zusätzliche Kriterien für das Abspeichern einer Meßwertefolge festzulegen. Ferner kann die Tatsache, daß ein "unnormaler" Schraubfall auftritt und abgespeichert wird, dem Benutzer auch auf andere Weise als im alphanumerischen Display 23 angezeigt werden, z.B. mittels einer gesonderten Anzeige-LED 25.

Durch Befehlseingabe an der Tastatur 19 kann das Gerät auch auf andere Betriebsweise umgesteuert werden, in der ein jeweils gemessener Schraubfall, unabhängig davon ob sein charakteristischer Wert ϕₘₐₓ und/oder Mₘₐₓ im Sollbereich liegt oder nicht, abgespeichert wird. Somit können bedarfsweise auch "normale" Schraubverläufe, z.B. für Vergleichszwecke, gespeichert und vor Ort auf dem Bildschirm 27 dargestellt werden.

Das dargestellte Prüfgerät ist vorzugsweise mit einem wiederaufladbaren Akku ausgerüstet und somit netzunabhängig. Sein Datenspeicher 34 kann so ausgelegt sein, daß z.B. 32 Meßverläufe, d.h. Folgen von Wertepaaren des Drehmoments M und Drehwinkels ϕ, abgespeichert werden können.

## Patentansprüche

1. Prüfgerät zum Überprüfen der Qualität von Schraubverbindungen, mit einem als tragbares Koffergerät ausgebildeten Gehäuse (1), das mindestens einen Eingangsanschluß (11) wahlweise von Meßsignalleitungen von verschiedenen, mit Drehmoment- und Drehwinkelsensoren versehenen Schraubgeräten (17), einen Rechner (30) zum Aufnehmen der Folge von zusammengehörigen Meßwerten des Drehmoments und Drehwinkels während eines Schraubvorgangs, einem Datenspeicher (34) zum Speichern der Meßwertverläufe für eine Vielzahl von Schraubvorgängen, und eine Tastatur (9) zur Eingabe von Funktionsbefehlen aufweist,
wobei der Rechner (30) so programmiert ist, daß er mindestens einen charakteristischen Wert (ϕₘₐₓ, Mₘₐₓ) des Drehmoments und/oder Drehwinkels während jedes Schraubvorgangs mit einem vorgegebenen Sollbereich (ϕ₁-ϕ₂; M₁-M₂) für diesen Wert vergleicht,
dadurch **gekennzeichnet**,
daß der Rechner (30) so programmiert ist, daß er in einem durch die Tastatur eingebbaren Betriebsmodus das Abspeichern des Meßwertverlaufs nur der Schraubvorgänge, deren charakterisfischer Wert außerhalb des Sollbereichs liegt, steuert,
und daß an dem Gehäuse ein Graphikbildschirm (27) vorgesehen ist, der durch den Rechner (30) zur graphischen Dartellung der abgespeicherten Meßwertverläufe im Drehmoment-Drehwinkeldiagramm steuerbar ist.

2. Prüfgerät nach Anspruch 1, dadurch **gekennzeichnet,** daß der charakteristische Wert der Wert (ϕₘₐₓ) des Drehwinkels ist, bei dem das maximale Drehmoment (Mₘₐₓ) oder ein vorgegebenes Solldrehmoment des Schraubvorgangs erreicht wird.

3. Gerät nach Anspruch 1, dadurch **gekennzeichnet,** daß der charakteristische Wert das erreichte Enddrehmoment (Mₘₐₓ) ist.

4. Gerät nach Anspruch 1, dadurch **gekennzeichhnet,** daß der Bildschirm (27) an der Innenseite eines aufklappbaren Deckels (7) des Gehäuses (1) angeordnet ist.

5. Gerät nach Anspruch 1, dadurch **gekennzeichnet,** daß der Sollbereich (ϕ₁-ϕ₂; M₁-M₂) mittels der Tastatur (19) in den Rechner eingebbar ist.

6. Gerät nach Anspruch 1, dadurch **gekennzeichnet,** daß eine Anzeigevorrichtung (23, 25) vorgesehen ist, die vom Rechner angesteuert wird, wenn eine Meßwertfolge in den Datenspeicher eingespeichert wird oder eingespeichert wurde.

## Claims

1. Instrument for testing the quality of screwed connections, with a casing in the form of a portable case unit (1), which features at least one input connection (11), connected selectively to measurement signal cables from different screw-tightening devices (17) equipped with torque and angle of rotation sensors, a processor (30) for recording the sequence of associated measured values for the torque and angle of rotation during a screw-tightening procedure, a data memory (34) for storing the measured value curves for numerous screw-tightening procedures, and a keypad (9) for entering function commands, whereby the processor (30) is programmed in such a way that it compares at least one characteristic value (ϕₘₐₓ, Mₘₐₓ) for the torque and/or angle of rotation during a screw-tightening procedure with a specified tolerance range (ϕ₁- ϕ₂; M₁ - M₂) for this value, characterized in that the processor (30) is programmed in such a way that, in an operating mode which can be entered using the keypad, it only initiates the storage of the measured value curve of those screw-tightening procedures where the characteristic values lie outside of the tolerance range, and that the casing features a graphic screen (27) which can be controlled by the processor (30) to provide a graphic representation of the stored measured value curves in the torque/angle of rotation diagram.

2. Testing instrument in accordance with Claim 1, characterized in that the characteristic value is the value (ϕₘₐₓ) of the angle of rotation at which the maximum torque (Mₘₐₓ) or a specified nominal torque is achieved during the screw-tightening procedure.

3. Testing instrument in accordance with Claim 1, characterized in that the characteristic value is the final torque (Mₘₐₓ) which is achieved.

4. Testing instrument in accordance with Claim 1, characterized in that the screen (27) is located on the inner side of a hinged cover (7) on the casing (1).

5. Testing instrument in accordance with Claim 1, characterized in that the tolerance range (ϕ₁- ϕ₂; M₁ - M₂) can be entered into the processor using the keypad (19).

6. Testing instrument in accordance with Claim 1, characterised in that an indicator device (23, 25) is provided which is activated by the processor when a sequence of measured values is, or has been, stored in the data memory.

## Revendications

1. Appareil de contrôle de la qualité d'assemblages vissés, avec une boîte (1) construite sous forme d'appareil portable, comme une valise, qui comporte au moins une' borne d'entrée (11), destinée à être reliée à volonté à des lignes de signaux de mesure de différents outils de vissage (17) équipés de capteurs de couple et d'angle, un ordinateur (30) destiné à recevoir la suite de valeurs mesurées associées du coupie et de l'angle pendant une opération de vissage, une mémoire de données (34) destinée à mémoriser les courbes des valeurs mesurées pour, plusieurs opérations de vissage, et un clavier (9) destiné à entrer des ordres déclenchant des fonctions,
l'ordinateur (30) étant programmé de telle sorte qu'il compare au moins une valeur caractéristique (ϕₘₐₓ, Mₘₐₓ) du couple et/ou ce l'angle pendant chaque opération de vissage avec une plage de consigne (ϕ₁ - ₂, M₁ - M₂) prescrite pour cette valeur,
caractérisé en ce que
l'ordinateur (30) est programmé de telle sorte qu'il commande, dans un certain mode de fonctionnement qui peut être déclenché par l'intermédiaire du clavier, la mémorisation de la courbe de valeur mesurée des seules opérations de vissage dont la valeur caractéristique se trouve en dehors de la plage de consigne,
et il est prévu dans la boîte un écran graphique (27) qui peut être commandé par l'ordinateur (30) pour représenter graphiquement les courbes mémorisées de valeurs mesurées dans un diagramme donnant le couple en fonction de l'angle.

2. Appareil, de contrôle selon la revendication 1, caractérisé en ce, que la valeur caractéristique est la valeur (ϕₘₐₓ) de l'angle pour lequel le couple maximal (M_{MAX}) ou un couple de consigne prescrit de l'opération de vissage est atteint.

3. Appareil selon la revendication 1, caractérisé en ce que la valeur caractéristique est le couple final atteint (M_{MAX}).

4. Appareil de contrôle selon la revendication 1, caractérisé en ce que l'écran graphique (27) est disposé aur la face intérieure d'un couvercle pivo (7) de la boîte (1).

5. Appareil de contrôle selon la revendication 1, caractérisé en ce que la plage de consigne (ϕ₁ - ϕ₂, M₁ - M₂) peut être entrée dans l'ordinateur au moyen du clavier (19).

6. Appareil de contrôle selon la revendication 1, caractérisé en ce qu'il est prévu un indicateur (23, 25) qui est commandé par l'ordinateur lorsqu'une suite de valeurs mesurées eut introduite ou a été introduite dans la mémoire de données (34).
